Europäisches Patentamt

European Patent Office

Office européen des brevets

(19)

(11) Veröffentlichungsnummer: **0 232 759**
**B1**

(12) **EUROPÄISCHE PATENTSCHRIFT**

(45) Veröffentlichungstag der Patentschrift:
**28.11.90**

(51) Int. Cl.⁵: **B01D 3/00**, F28F 25/04,
**B01D 11/04**

(21) Anmeldenummer: **87100790.2**

(22) Anmeldetag: **21.01.87**

(54) **Rohrarmverteiler für eine disperse Phase in einer Flüssig-Flüssig-Extraktionskolonne, einer Gas-Flüssig-Blasenkolonne und einer Reaktionskolonne.**

(30) Priorität: **03.02.86 CH 403/86**

(43) Veröffentlichungstag der Anmeldung:
**19.08.87 Patentblatt 87/34**

(45) Bekanntmachung des Hinweises auf die Patenterteilung:
**28.11.90 Patentblatt 90/48**

(84) Benannte Vertragsstaaten:
**AT BE DE FR GB IT NL**

(56) Entgegenhaltungen:
**FR-A- 434 323**
**US-A- 3 217 469**

(73) Patentinhaber: **GEBRÜDER SULZER
AKTIENGESELLSCHAFT**, Zürcherstrasse 9,
**CH-8401 Winterthur(CH)**

(72) Erfinder: **Streiff, Felix, Jonas Furrer-Strasse 42,
CH-8400 Winterthur(CH)**
Erfinder: **Mathys, Peter, Industriestrasse 43,
CH-8212 Neuhausen(CH)**

(74) Vertreter: **Sparing Röhl Henseler Patentanwälte
European Patent Attorneys, Rethelstrasse 123,
D-4000 Düsseldorf 1(DE)**

ACTORUM AG

## Beschreibung

Die Erfindung betrifft einen Rohrarmverteiler für eine disperse Phase in einer Flüssig-Flüssig-Extraktionskolonne, einer Gas-Flüssig-Blasenkolonne oder einer Reaktionskolonne, mit mindestens einem Rohr mit längs des Rohrs verteilten Dosieröffnungen.

In Siebbodenkolonnen, bei welchen zwischen den Siebböden Rührer angeordnet sein können, ist es üblich, eine disperse Phase über eine einzige Dosierstelle zuzuführen. Messungen der axialen Rückvermischung in Kolonnen mit Packungskörpern mit geordneter Struktur oder Füllkörperschüttungen haben gezeigt, daß die Rückvermischung entscheidend von einer gleichmäßigen Verteilung der dispersen Phase über den Kolonnenquerschnitt abhängt.

Gebräuchliche Rohrarmverteiler, wie sie beispielsweise dem Sulzer Prospekt d/22.13.06.20 "Trennkolonnen für Destillation und Absorption" auf den Seiten 32 und 33 dargestellt sind, sind für die Verteilung einer dispersen Phase in Kolonnen, wie sie die Erfindung betrifft, nicht geeignet.

Die bekannten Rohrarmverteiler bestehen aus sich über den Kolonnenquerschnitt erstreckenden Rohrarmen bzw. nach oben offenen, kastenartigen Elementen, die in ihrem unteren Bereich Austrittsöffnungen für die zu verteilende Flüssigkeit aufweisen, und die von einem darüber angeordneten Zulaufkanal gespeist werden. Es ist hierbei üblich, pro Rohrarm nur eine Austrittsöffnung im Zulaufkanal vorzusehen.

Bei derartigen Verteilern ist für eine gleichmäßige Verteilung der Flüssigkeit etwa die vier- bis zehnfache Austrittsgeschwindigkeit aus den Austrittsöffnungen im Vergleich zu der Geschwindigkeit in einem Rohrarm erforderlich.

Dieses hat hohe Austrittsgeschwindigkeiten aus den Rohrarmen zur Folge. Hierdurch entstehen beim Austritt einer dispersen Phase in die umgebende kontinuierliche Phase und beim Aufprall auf in einer Kolonne angeordneten Packungskörpern oder Füllkörperschüttungen bereits so kleine Tröpfchen, daß ein vorzeitiges Fluten und/oder ein starkes Entrainment, d.h. ein Mitreissen von Tröpfchen mit der kontinuerlichen Phase entsteht.

Bei offenen Kastenverteilern, d.h., wenn anstelle der Rohrarme kastenartige Elemente vorhanden sind, tritt durch Aufprall an der Flüssigkeitsoberfläche und aufgrund der unterhalb der Zulaufstellen vorhandenen Querströmung Emulgierung auf, und es entstehen kleine Sekundärtröpfchen.

Der Erfindung liegt die Ausbildung eines Verteilers für eine disperse Phase zugrunde, welche eine gleichmäßige Verteilung der dispersen Phase ohne Aufprallerscheinungen und Bildung von Sekundärtröpfchen auf den Querschnitt einer Kolonne der eingangs beschriebenen Kategorie ermöglicht.

Diese Aufgabe wird dadurch gelöst, daß das Rohr mit seinen Dosieröffnungen durch ein horizontal angeordnetes, kastenartiges Element teilweise umgriffen wird, wobei das Element eine Vielzahl von seitlich angebrachten Austrittsöffnungen aufweist, die gegenüber den Dosieröffnungen des Rohrs bezüglich der Sink- bzw. Steigrichtung der dispersen Phase vom Rohrarmverteiler zurückversetzt sind.

Im Falle, daß die disperse Phase leichter als die kontinuierliche Phase ist, umgreifen die kastenartigen Elemente den oberen Teil der Rohrarme und die Dosieröffnungen liegen oberhalb der Austrittsöffnungen. Wenn die disperse Phase die schwerere Phase ist, verhält es sich umgekehrt, d.h. die kastenartigen Elemente umgreifen den unteren Teil der Rohrarme, und die Austrittsöffnungen liegen oberhalb der Dosieröffnungen.

Vorteilhafte Ausführungsformen bzw. Weiterbildungen der Erfindung sind in den Kennzeichen der Ansprüche 2 bis 14 angegeben.

Die Erfindung wird im folgenden anhand von in der Zeichnung dargestellten Ausführungsbeispielen erläutert.

Die Fig. 1 zeigt in Seitenansicht eine Kolonne mit einem Teilschnitt,

Fig. 2 und 3 einen Rohrarmverteiler in einem Seitenschnitt und einen Grundriss

und Fig. 4 einen Teilausschnitt eines Rohrarmverteilers.

In Fig. 5 und 6 ist in einem Seitenschnitt und einem Grundriss ein Rohrarmverteiler mit nur einem Rohrarm dargestellt.

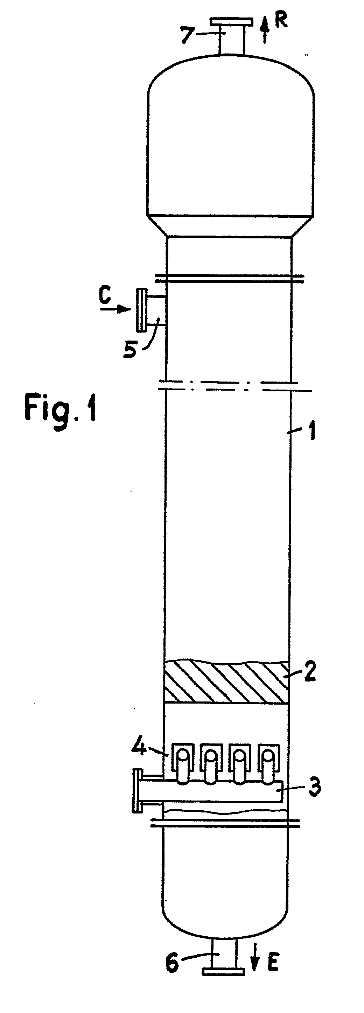

Die in Fig. 1 dargestellte Kolonne ist z.B. eine Extraktionskolonne 1 mit Packungskörpern 2, in welcher mittels Toluol aus Wasser/Aceton das Aceton extrahiert werden soll.

Toluol ist die leichtere Phase D, die durch ein Rohr 3 in die Kolonne 1 eingeleitet und von einem Rohrarmverteiler 4 aus als dispergierte Phase in gleichmässiger Verteilung auf den untersten Querschnitt der Packungskörper 2 aufgegeben wird. Durch einen Rohrstutzen 5 wird die schwerere, kontinuierliche Phase C, z.B. Wasser/Aceton in die Kolonne 1 eingeleitet. Vom Boden der Kolonne 1 wird dann durch einen Stutzen 6 als Produkt E Wasser entnommen, während das mit Aceton beladene Toluol als Kopfprodukt R aus einem Rohrstutzen 7 herausgeführt wird.

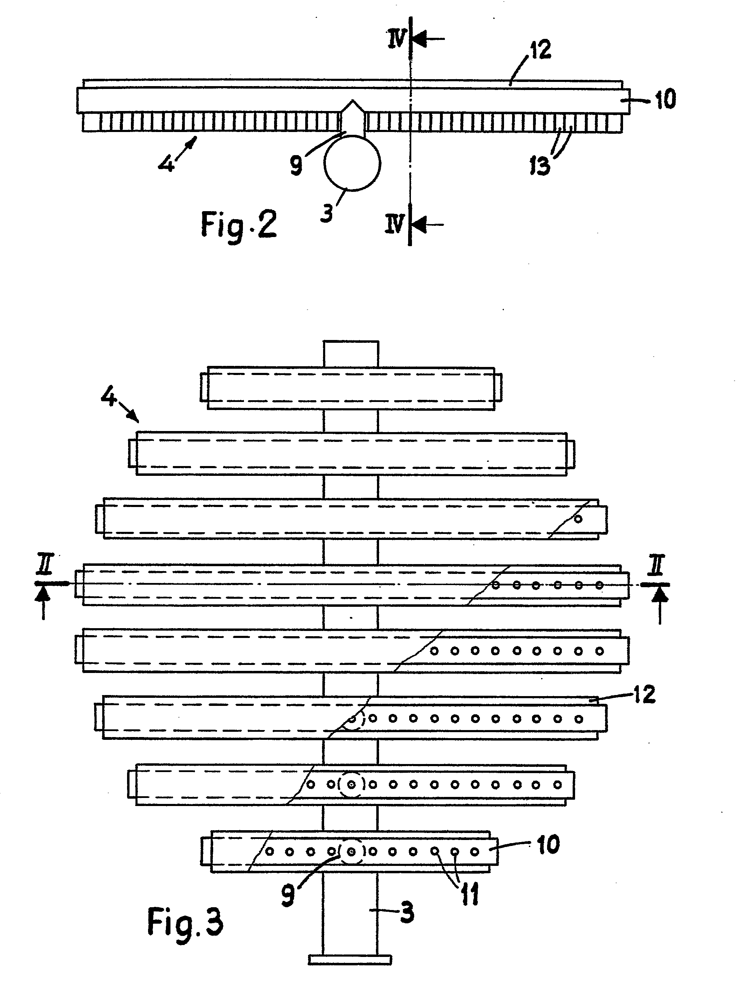

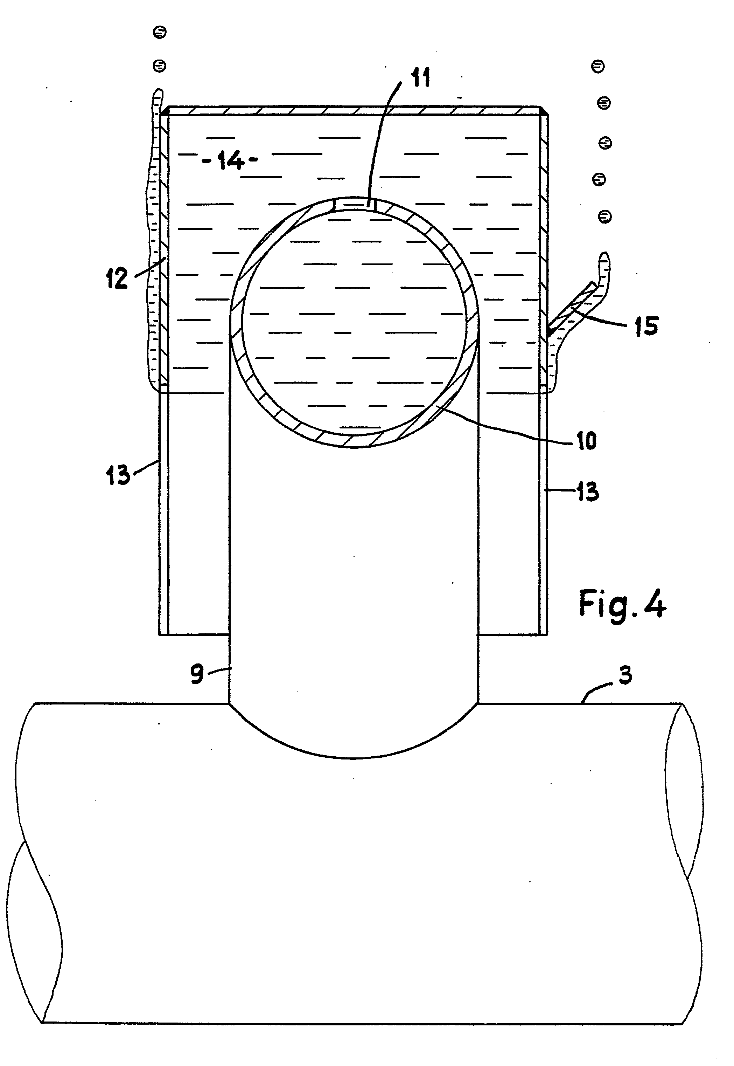

Im Folgenden wird der Rohrarmverteiler 4 anhand der Fig. 2 bis 4 erläutert.

Im Ausführungsbeispiel soll es sich um eine Kolonne mit grossem Durchmesser von z.B. mehr als 1 m handeln.

Als Zulaufeinrichtung ist das sich über den Kolonnendurchmesser erstreckende Hauptrohr 3 angeordnet. Von ihm aus wird über Verteilrohre 9 die zu dispergierende Phase in die Rohrarme 10 eingeleitet. Die Rohrarme 10, die auch z.B. einen quadratischen oder rechteckigen Querschnitt aufweisen könnten, weisen in ihrem oberen Bereich Dosieröffnungen 11 auf. Kastenartige, an ihren gegenüberliegenden Enden geschlossene Elemente 12, die in ihren Seitenwänden durchgehende Schlitze 13 besitzen, bilden einen Sammelraum 14 für die austretende, zu dispergierende Phase. Die kastenartigen Elemente müssen nicht als durchgehende Einheit ausgebildet sein, sondern können auch aus mehreren Abschnitten bestehen. Dieses hat den Vorteil, dass bei einer eventuellen Schrägstellung die Abschnitte einfacher ausgerichtet werden können.

Da im Ausführungsbeispiel die leichtere Phase, z.B. Toluol bei einem Wasser/Aceton/Toluol Stoffsystem, dispergiert und verteilt werden soll, sind die kastenartigen Elemente l2 oberhalb der Rohrarme ll angeordnet.

Im Betrieb tritt Toluol mit relativ hoher Geschwindigkeit durch die Dosieröffnungen, z.B. Bohrungen mit einem relativ grossen Durchmesser von beispielsweise 5 bis l0 mm zur Vermeidung von Verstopfungen durch Verschmutzungen, in den Raum l4 aus. Hierdurch wäre schon eine gleichmässige Grobverteilung über den Kolonnenquerschnitt sichergestellt. Die Feinverteilung wird durch die Schlitze l3 in den Seiten wänden der Elemente l2 erreicht. Im vorliegenden Anwendungsfall sind die Schlitze l3 im unteren Bereich der Elemente l2 und somit unterhalb der Dosieröffnungen ll angeordnet, so dass sich um die Dosieröffnungen immer disperse Phase in noch kontinuierlicher Form befindet. Dadurch kann mit hoher Austrittsgeschwindigkeit dosiert werden, ohne dass kleine Tropfen entstehen. Durch eine relativ dichte Anordnung der Dosieröffnungen ll in den Rohrarmen l0, z.B. eine Dosieröffnung pro vier Schlitze, kann eine Querströmung innerhalb der Elemente l2 vermieden werden. Der Ablauf aus den Elementen l2 erfolgt dann mit einer äusserst kleinen Geschwindigkeit, entsprechend der sich einstellenden Stauhöhe an den Schlitzen l3. Hierdurch wird die Bildung unerwünschter kleiner Tropfen oder gar eine Emulgierung vermieden.

Durch die erfindungsgemässe Anordnung der Schlitze in bezug auf die Dosieröffnungen, kommt ein siphonartiger Abschluss zustande, so dass sich der Rohrarmverteiler nie mit der kontinuierlichen Phase, die im Betrieb den Rohrarmverteiler umgibt, füllen kann. Letzteres ist jedoch der Fall bei den einleitend erwähnten bekannten Rohrarmverteilern. Um ein Anlegen der dispergierten Phase an die Aussenwandung der Elemente l2 und eine Schlierenbildung mit Sicherheit zu vermeiden, sind in Abströmrichtung der dispersen Phase an den Rändern der Schlitze l3 an den kastenartigen Elementen l2 sich über deren Länge erstreckende, als Abweiseinrichtungen dienende, abgewinkelte Bleche l5 angebracht. Vorteilhaft sind diese an ihren Randpartien gezackt. Gegebenenfalls können als Abweiseinrichtungen auch an den Seitenwänden der Elemente l2 angebrachte Drähte dienen.

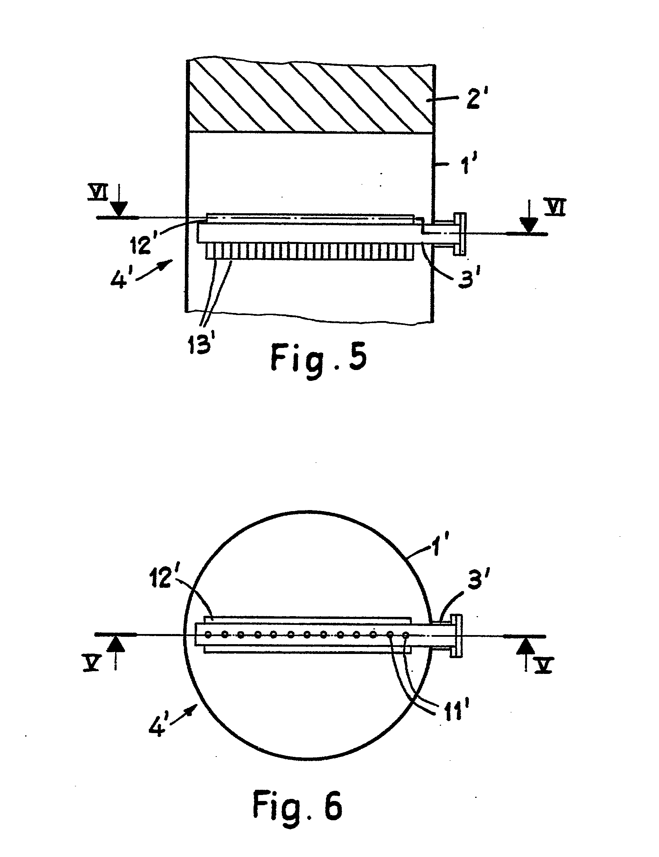

Bei einer Kolonne mit kleinem Durchmesser kann es ausreichend sein, einen Rohrarmverteiler 4' nur mit einem Rohrarm l0' auszubilden, welcher von einem kastenartigen Element l2' mit Längsschlitzen l3' teilweise umgeben ist (vergl. Fig. 5 und 6).

## Patentansprüche

1. Rohrarmverteiler für eine disperse Phase (D) in einer Flüssig-Flüssig-Extraktionskolonne, einer Gas-Flüssig-Blasenkolonne oder einer Reaktionskolonne (1), mit mindestens einem Rohr (10) mit längs des Rohrs verteilten Dosieröffnungen (11), dadurch gekennzeichnet, daß das Rohr (10) mit seinen Dosieröffnungen (11) durch ein horizontal angeordnetes, kastenartiges Element (12) eine Vielzahl von seitlich angebrachten Austrittsöffnungen (13) aufweist, die gegenüber den Dosieröffnungen (11) des Rohrs (10) bezüglich der Sink- bzw. Steigrichtung der dispersen Phase (D) zurückversetzt sind.

2. Rohrarmverteiler nach Anspruch l, dadurch gekennzeichnet, dass das kastenartige Element einen U-förmigen Querschnitt aufweist.

3. Rohrarmverteiler nach Anspruch l, dadurch gekennzeichnet, dass das kastenartige Element einen halbkreisförmigen Querschnitt aufweist.

4. Rohrarmverteiler nach Anspruch l, dadurch gekennzeichnet, dass die Dosieröffnungen durch Bohrungen hergestellt sind.

5. Rohrarmverteiler nach Anspruch l, dadurch gekennzeichnet, dass die Dosieröffnungen durch eingefräste Schlitze hergestellt sind.

6. Rohrarmverteiler nach Anspruch l, dadurch gekennzeichnet, dass im kastenartigen Element mehrere seitliche Austrittsöffnungen einer Dosieröffnung im Rohrarm zugeordnet sind.

7. Rohrarmverteiler nach Anspruch l, dadurch gekennzeichnet, dass die seitlichen Austrittsöffnungen im kastenartigen Element als vertikale Schlitze ausgebildet sind.

8. Rohrarmverteiler nach Anspruch l, dadurch gekennzeichnet, dass die seitlichen Austrittsöffnungen im kastenartigen Element als Reihen mit übereinander angeordneten Löchern ausgebildet sind.

9. Rohrarmverteiler nach Anspruch l, dadurch gekennzeichnet, dass in Abströmrichtung der dispersen Phase an den Rändern der seitlichen Austrittsöffnungen am kastenartigen Element sich über dessen Länge erstreckende Abweiseinrichtungen angebracht sind.

l0. Rohrarmverteiler nach Anspruch 9, dadurch gekennzeichnet, dass die Abweiseinrichtungen aus abgewinkelten Blechen bestehen.

ll. Rohrarmverteiler nach Anspruch l0, dadurch gekennzeichnet, dass die abgewinkelten Bleche gezackt sind.

l2. Rohrarmverteiler mit mehreren Rohrarmen, dadurch gekennzeichnet, dass sich die Rohrarme über den Querschnitt der Kolonne erstrecken und mit einem Aufgaberohr über Verteilrohre verbunden sind.

l3. Rohrarmverteiler nach Anspruch l, dadurch gekennzeichnet, dass der Rohrverteiler aus Blech besteht.

l4. Rohrarmverteiler nach Anspruch l, dadurch gekennzeichnet, dass der Rohrverteiler aus Kunststoff besteht.

## Claims

1. A tubular arm distributor for a dispersed phase (D) in a liquid-liquid extraction column, a gas-liquid bubble column or a reaction column (1), the distributor comprising at least one tube (10) formed along its length with metering orifices (11), characterised in that a horizontal box-like element (12) extends to some extend around the tube (10) with its metering orifices (11) and is formed with a number of lateral

exit orifices (13) set back from the metering orifices (11) in the tube (10) in respect of the descending or rising direction of the dispersed phase (D).

2. A distributor according to claim 1, characterised in that the box-like element has a channel cross-section.

3. A distributor according to claim 1, characterised in that the box-like element has a semicircular cross-section.

4. A distributor according to claim 1, characterised in that the metering orifices are in the form of bores.

5. A distributor according to claim 1, characterised in that the metering orifices are in the form of slots contrived by milling.

6. A distributor according to claim 1, characterised in that a number of lateral exit orifices in the box-like element are associated with one metering orifice in the arm.

7. A distributor according to claim 1, characterised in that the lateral exit orifices in the box-like element are vertical slots.

8. A distributor according to claim 1, characterised in that the lateral exit orifices in the box-like element are in the form of rows of apertures disposed one above another.

9. A distributor according to claim 1, characterised in that deflecting means which extend over the length of the box-like element are provided on the edges of the lateral exit orifices in such element in the discharging direction of the dispersed phase.

10. A distributor according to claim 9, characterised in that the deflecting means are in the form of bent sheet metal members.

11. A distributor according to claim 10, characterised in that the bent sheet metal members are jagged.

12. A distributor according to claim 1, having a number of tubular arms, characterised in that the same extend over the column cross-section and are connected to a supply tube by way of distributing tubes.

13. A distributor according to claim 1, characterised in that the distributor is made of sheet metal.

14. A distributor according to claim 1, characterised in that the distributor is made of plastics.

**Revendications**

1. Répartiteur à bras tubulaires pour une phase dispersée (D) dans une colonne d'extraction liquide-liquide, une colonne à bulles gaz-liquide ou une colonne de réaction (1), comportant au moins un tube (10) avec des orifices de dosage (11) répartis le long du tube, caractérisé en ce que le tube (10) avec ses orifices de dosage (11) est partiellement entouré par un élément (12) horizontal, en forme de caisse, l'élément (12) comportant une pluralité d'orifices de sortie (13), placés sur le côté et qui sont en retrait par rapport aux orifices de dosage (11) du tube (10), par rapport au sens descendant ou ascendant de la phase dispersée (D).

2. Répartiteur à bras tubulaires selon la revendication 1, caractérisé en ce que l'élément en caisse présente une section transversale en U.

3. Répartiteur à bras tubulaires selon la revendication 1, caractérisé en ce que l'élément en caisse présente une section transversale semi-circulaire.

4. Répartiteur à bras tubulaires selon la revendication 1, caractérisé en ce que les orifices de dosage sont des perçages.

5. Répartiteur à bras tubulaires selon la revendication 1, caractérisé en ce que les orifices de dosage sont des fentes fraisées.

6. Répartiteur à bras tubulaires selon la revendication 1, caractérisé en ce que, dans l'élement en caisse, plusieurs orifices de sortie latéraux sont associés à un orifice de dosage du bras tubulaire.

7. Répartiteur à bras tubulaires selon la revendication 1, caractérisé en ce que les orifices de sortie latéraux sont des fentes verticales pratiquées dans l'élément en forme de caisse.

8. Répartiteur à bras tubulaires selon la revendication 1, caractérisé en ce que les orifices de sortie latéraux sont des rangées de trous superposés, pratiqués dans l'élément en forme de caisse.

9. Répartiteur à bras tubulaires selon la revendication 1, caractérisé en ce qu'on place des dispositifs déflecteurs, dans le sens d'écoulement de la phase dispersée, sur les bords des orifices de sortie latéraux pratiqués dans l'élément en forme de caisse, répartis sur toute la longueur de celui-ci.

10. Répartiteur à bras tubulaires selon la revendication 9, caractérisé en ce que les dispositifs déflecteurs sont des tôles coudées.

11. Répartiteur à bras tubulaires selon la revendication 10, caractérisé en ce que les tôles coudées sont découpées en dents de scie.

12. Répartiteur à bras tubulaires selon la revendication 1, comportant plusieurs bras tubulaires, caractérisé en ce que les bras tubulaires s'étendent sur la section transversale de la colonne et sont reliés à un tube de chargement, par des tubes répartiteurs.

13. Répartiteur à bras tubulaires selon la revendication 1, caractérisé en ce que le répartiteur à tubes est en tôle.

14. Répartiteur à bras tubulaires selon la revendication 1, caractérisé en ce que le répartiteur à tubes est en matière plastique.

Fig. 1

Fig·2

Fig.3

Fig. 4

Fig. 5

Fig. 6